# DEMANDE DE BREVET EUROPEEN

(11) **EP 4 674 661 A1**
(43) Date de publication de la demande: **07.01.2026**
(21) Numéro de dépôt: 25185349.5
(22) Date de dépôt: 25.06.2025
(51) Int. Cl.: B60K 15/05, B60K 1/00

(54) **TRAPPE DE CHARGEMENT COMPORTANT UN MOYEN D' ÉTANCHÉITÉ AMÉLIORÉ POUR VÉHICULE**

(30) Priorité: 03.07.2024 FR 2407236
(71) Demandeur: Renault s.a.s, 92100 Boulogne Billancourt (FR)
(72) Inventeur: ANTON, Eduardo, 47008 VALLADOLID (ES); LOPEZ-PEREZ, Lucia, 47008 VALLADOLID (ES); POTENCIANO, Sara, 47008 VALLADOLID (ES)

(57) **Abrégé**

L'invention concerne une trappe de chargement (4) comportant un bol (5) et un couvercle (6) articulé autour du bol, notamment à rotation d'axe sensiblement vertical, le bol (5) comprenant au moins une ouverture (50-55), caractérisée en ce qu'il comprend un moyen d'étanchéité (2), notamment à l'eau, disposé à proximité de l'au moins une ouverture ménagée sur la trappe.

L'invention concerne également un agencement d'une pièce de carrosserie (10) d'un véhicule et d'une trappe de chargement (4), le moyen d'étanchéité (2) étant disposé en partie sommitale de la trappe (4) de telle sorte que l'écoulement de l'eau le long de la pièce de carrosserie (10), notamment le long d'un axe sensiblement vertical, contourne au moins une ouverture (50-55) de la trappe (4).

L'invention concerne également un véhicule ayant la trappe et ou l'agencement.

## Description

### Domaine technique

L'invention est du domaine des véhicules automobiles, notamment des véhicules électriques, plus particulièrement des trappes, notamment de chargement en électricité, et des systèmes de protection associés, notamment de protection par une étanchéité améliorée à l'eau.

### Techniques antérieures

Il est connu des véhicules électriques comportant une batterie de traction rechargeable par une connexion filaire à une borne de recharge. Dans ce but, les véhicules électriques comprennent une prise de chargement qui est assemblée à une pièce de carrosserie, notamment une aile avant ou arrière, par l'intermédiaire d'un bol rapporté. La pièce de carrosserie comprend ainsi une ouverture au travers de laquelle une prise de chargement est apte à s'étendre, afin de connecter la prise reliée à la batterie de traction du véhicule à la prise d'un câble de chargement.

L'ouverture de l'aile est fermée par un couvercle qui est articulé sur le bol de la prise du véhicule, laquelle est reliée à la batterie. Le couvercle peut être par exemple monté à rotation sur le bol, notamment à rotation autour d'un axe sensiblement vertical.

Le bol permet de loger la prise du véhicule en retrait par rapport à la pièce de carrosserie de telle sorte que le couvercle s'étend dans un plan différent à celui de l'ouverture de l'aile, les plans étant notamment parallèles l'un à l'autre.

Outre l'ouverture principale du fond de bol au travers de laquelle s'étend la prise du véhicule, le fond de bol peut comprendre d'autres ouvertures destinées à un module électronique comportant des boutons poussoirs de commande et/ou des voyants de charge. La prise du véhicule et le module électronique sont rapportés fixés sur la face intérieure du fond de bol, et qu'ils s'étendent notamment au travers d'ouvertures.

Il a été constaté que l'eau de pluie vient en contact avec le fond de bol, notamment par un effet d'écoulement le long de la pièce de carrosserie sur laquelle est monté le bol de prise, et que par voie de conséquence cela créé un risque d'écoulement d'eau vers le côté intérieur de la pièce de carrosserie.

Il existe donc un besoin optimisation afin de proposer une dispositif de collecte d'eau sur une prise de charge de telle sorte que l'étanchéité puisse être augmentée pour réduire les risques de corrosion de la caisse du véhicule.

### Résumé de l'invention

L'invention concerne une trappe de chargement comportant un bol et un couvercle articulé autour du bol, notamment à rotation d'axe sensiblement vertical, le bol comprenant au moins une ouverture, le trappe comprend un moyen d'étanchéité, notamment à l'eau, disposé à proximité de l'au moins une ouverture ménagée sur la trappe.

Le recours à une telle trappe de chargement vise avantageusement à améliorer l'étanchéité intrinsèque de la trappe de chargement qui comprend des fonctionnalités augmentées, notamment par la présence d'un module électronique disposé à proximité immédiate de la prise de chargement.

L'objet de l'invention peut en outre comprendre les caractéristiques suivantes prises séparément ou en combinaison entre elles :
- ledit moyen d'étanchéité comprend au moins une nervure, notamment des nervures secondaires entourant en toute au partie au moins une ouverture afin de former une paroi saillante de guidage de l'eau hors de l'ouverture, l'ouverture étant destinée à recevoir un module électronique fixé contre une face intérieure du bol,
- la nervure, notamment la nervure secondaire, a un profil sensiblement en U inversé de telle sorte qu'elle entoure des bords supérieur et latéraux d'une large ouverture,
- la nervure, notamment la nervure secondaire, a un profil sensiblement en U inversé de telle sorte qu'elle entoure à la fois un bord supérieur et un bord latéral d'une première ouverture et d'une seconde ouverture, les première et seconde ouvertures étant disposées l'une à côté de l'autre.,
- les première et seconde ouvertures sont chacune disposées au-dessous de la large ouverture,
- ledit moyen d'étanchéité comprend une nervure s'étendant le long d'un bord périphérique du bol, notamment un bord périphérique supérieur, afin de former une paroi saillante de guidage de l'eau hors d'un fond de bol,
- l'au moins une nervure et le bol sont réalisés par moulage d'une matière plastique,
- ledit moyen d'étanchéité comprend au moins un joint d'étanchéité s'étendant en toute ou partie le long d'un bord périphérique d'une ouverture, notamment d'une ouverture de prise et/ou d'une ouverture d'un moyen de verrouillage et/ou d'une ouverture de support du panneau du couvercle,
- ledit moyen d'étanchéité comprend au moins un joint d'étanchéité s'étendant en périphérique d'un bord de la trappe, notamment d'un joint intérieur situé sur un bord intérieur périphérique du bol et/ou un joint situé sur un bord périphérique de support et/ou un joint extérieur situé sur un bord extérieur périphérique du bol,
- le joint d'étanchéité est réalisé par surmoulage d'une matière plastique déformable du bol et/ou du support de couvercle.

L'invention a aussi trait à un agencement d'une pièce de carrosserie, notamment du type d'une aile ou d'une aile arrière, d'un véhicule, notamment de type EV ou PHEV, et d'une trappe de chargement telle que précédemment décrite, selon lequel le moyen d'étanchéité est disposé en partie sommitale de la trappe de telle sorte que l'écoulement de l'eau le long de la pièce de carrosserie, notamment le long d'un axe sensiblement vertical, contourne au moins une ouverture de la trappe.

L'agencement selon l'invention peut se caractériser par le fait que la pièce de carrosserie comprend une ouverture, la trappe de chargement étant assemblée à une face intérieure de la pièce de carrosserie de manière à ce que le moyen d'étanchéité s'étende à la jonction de l'ouverture de la pièce de carrosserie et de la trappe.

L'agencement se caractérise également par le fait qu'il comprend un module électronique assemblé de manière démontable à la trappe, notamment par clippage.

L'invention concerne aussi un véhicule de type EV ou PHEV, caractérisé en ce qu'il comprend une trappe ayant en tout ou partie les caractéristiques susmentionnées, ou un agencement tel que précédemment décrit.

### Dessins

Les dessins annexés représentent, à titre d'exemple, un dispositif de management thermique d'un véhicule, selon l'invention.
La [Fig.1] représente un côté d'un véhicule, plus particulièrement une aile arrière, sur lequel est disposé une trappe de chargement ouverte, la trappe comportant un moyen de protection selon l'invention ;
la [Fig.2] représente un agrandissement d'un bol de trappe de chargement de la [Fig.1] pris isolément, comportant le moyen d'étanchéité selon l'invention ;
la [Fig.3] représente une partie du bol de la trappe de chargement de la [Fig.1], vue de l'arrière, comportant un module de commande selon l'invention.

### Description de l'invention

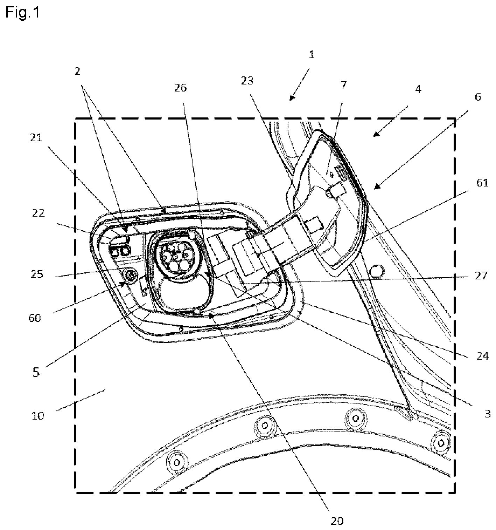

La [Fig.1] représente une partie arrière d'un véhicule 1 comportant une prise de chargement électrique 3 destinée à une phase de recharge en électricité d'une batterie de traction du véhicule réalisée par une connexion électrique à une borne de chargement reliée à un réseau de distribution d'électricité.

La prise de chargement électrique 3 est reliée à la pièce de carrosserie 10 du véhicule par une trappe de chargement 4 comportant un bol 5, un couvercle 6 et un moyen d'étanchéité 2. Le couvercle 6 est préférentiellement relié au bol par l'intermédiaire d'un mécanisme d'articulation permettant une rotation du couvercle autour d'un axe sensiblement vertical. Pour ce faire, le couvercle 6 est assemblé au bol 5 par un support 7 articulé qui comprend une portion en col de cygne permettant de positionner le couvercle en position d'ouverture dans un plan sensiblement perpendiculaire à celui du plan dans lequel évolue le fond du bol 5 de la trappe de chargement, tout en libérant en quasi-totalité l'accès de l'ouverture pratiquée au niveau de la pièce de carrosserie 10 donnant accès à la prise de charge du véhicule. La pièce de carrosserie 10 peut être une aile, notamment une aile avant ou une aile arrière comme cela est représenté sur la [Fig.1].

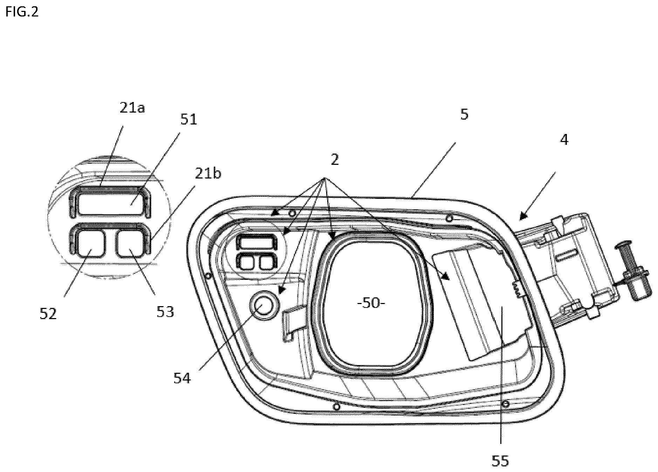

L'agrandissement de la trappe 4 de chargement de la batterie de traction telle qu'elle est représentée sur la [Fig.2] met en exergue le moyen d'étanchéité 2 particulier de la trappe de chargement 4.

Préférentiellement, ledit moyen d'étanchéité 2 est disposé à la jonction des différents composants assemblé sur, ou constituant, la trappe de chargement 4.

Le bol 5 de la trappe de chargement comprend une ouverture 50 destinée à recevoir la prise 3 du véhicule.

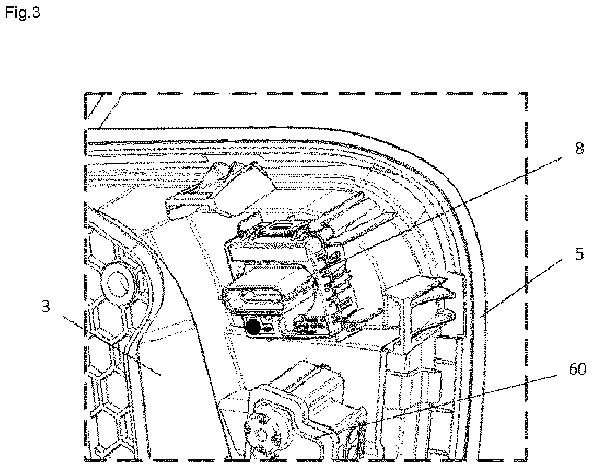

Le bol 5 de la trappe de chargement comprend au moins une ouverture 51, 52, 53 qui est destinée à recevoir au moins un élément d'un module électronique 8 de commande, notamment par au moins un bouton poussoir, ou d'information, notamment par voyant. Comme cela est visible sur la [Fig.3], ledit module électronique 8 est rapporté et fixé par clippage sur une face intérieure du bol 5, de sorte que son montage est réversible pour assurer son remplacement en cas de dysfonctionnement.

Sur la [Fig.1] le module électronique 8 est rendu visible par sa disposition en partie au travers des ouvertures 51, 52, 53 qui lui sont dédiées, telles qu'elles sont représentées sur la [Fig.2]. Les parties du module électronique 8 s'étendant au travers des ouvertures susmentionnées peuvent être un voyant d'état de charge de la batterie, une commande de déverrouillage de la connexion de la prise 3 du véhicule à un câble électrique et/ou une commande de verrouillage de la connexion de la prise 3 du véhicule à un câble électrique et/ou une commande de fermeture motorisée du couvercle de trappe de chargement et/ou une commande de départ différé de la recharge de la batterie, et/ou tout autre type de commande associée à un véhicule électrique.

Les commandes susmentionnées peuvent être respectivement de type bouton poussoir de telle sorte qu'un jeu d'assemblage est nécessaire entre le module de commande 8 et le bol 5. Du fait de l'agencement de la trappe 4 de chargement sur la pièce de carrosserie 10, un tel jeu d'assemblage engendre un risque d'écoulement d'air et/ou d'eau vers la face intérieure de la trappe de chargement 4, ce qui se traduit par un écoulement d'eau vers l'intérieur du véhicule.

Le moyen d'étanchéité 2 comprend au moins une nervure destinée à guider l'eau d'écoulement hors des ouvertures 50 à 54 de la trappe de chargement 4.

Préférentiellement, la nervure est rigide, et peut être obtenue par moulage d'un bol de la trappe de chargement 4.

De manière particulière, le moyen d'étanchéité 2 comprend une nervure 21, qualifiée aussi de nervure principale du fait de sa géométrie relativement aux autres nervures qui seront par la suite décrites. La nervure principale 21 s'étend à proximité d'un bord périphérique supérieur, notamment sur la quasi-totalité du bord périphérique supérieur du bol 5 de telle sorte que l'eau s'écoulant le long de la pièce de carrosserie 10 puisse être guidée vers au moins l'un des bords latéraux de la trappe, évitant de la sorte un écoulement en direction des ouvertures pratiquées au niveau du bol de la trappe de chargement. Compte tenu de la géométrie du bol 5, le fond du bol est disposé en retrait, notamment vers l'intérieur du véhicule, du bord périphérique du bol de telle sorte que l'agencement de la nervure principale 21 relie entre eux les deux bords opposés latéraux du bord périphérique destiné à la fixation du bol 5 contre la face intérieure de la pièce de carrosserie 10. Une telle conception est avantageuse en ce qu'elle tend à éviter à ce que l'eau s'écoulant le long de la carrosserie ne puisse s'écouler au niveau d'une paroi en retrait intérieur du bol 5, voire au niveau du fond du bol dans lequel est ménagé l'ouverture 50 de la prise de chargement 3, ou les ouvertures 51, 52, 53 au travers desquelles s'étendent des parties du module électronique 8.

De manière particulière encore, le moyen d'étanchéité 2 comprend au moins une nervure secondaire 21a, 21b qui s'étend à proximité d'au moins une ouverture du bol au travers de laquelle s'étend le module de commande 8. L'agrandissement de la [Fig.2] mets en évidence deux nervures secondaires 21a, 21b qui sont disposées de manière superposée l'une au-dessus de l'autre. La nervure secondaire supérieure 21a s'étend approximativement en périphérie des bords supérieur et latéraux de l'ouverture 51. La nervure secondaire inférieure 21b s'étend approximativement en périphérie des bords supérieur et latéraux d'un ensemble de deux ouvertures 52 et 53 adjacentes. Les nervures secondaires sont destinées à guider l'eau hors du jeu d'assemblage présent entre le module de commande 8 et le bol 5 de la trappe de chargement 4. Du fait de la présence des nervures secondaires 21a, 21b, l'eau peut être guidée hors des ouvertures 51, 52, 53 de telle sorte qu'il n'y a pas d'écoulement vers la zone intérieur du véhicule.

Chaque nervure 21, 21a ou 21b peut être assimilée étant donnée sa forme à une gouttière qui vise à guider l'eau s'écoulant notamment par gravité le long de la pièce de carrosserie et ensuite le long de la trappe 4, hors des ouvertures de sorte à améliorer l'étanchéité de la trappe.

Le moyen d'étanchéité 2 peut également être de type joint d'étanchéité 20, réalisé en matière déformable, notamment du caoutchouc. A ce titre, il peut comprendre un joint d'étanchéité 25 qui est disposé au niveau de l'ouverture 54 et qui est destinée à recevoir un moyen de verrouillage 60 du couvercle 6 en position de fermeture. Compte tenu de l'ouverture 54 de forme cylindrique, le joint d'étanchéité 25 peut être un joint d'étanchéité annulaire encerclant le corps du verrou 60 s'étendant au travers de l'ouverture 54.

Le moyen d'étanchéité 2 peut également comprendre un joint d'étanchéité 26 qui est disposé au niveau de l'ouverture 50 et qui est destinée à recevoir la prise 3 reliée électriquement à la batterie de traction. Compte tenu de l'ouverture 50 de forme ovoïde, le joint d'étanchéité 25 peut être de forme complémentaire de telle sorte qu'il encercle le corps de la prise 3 s'étendant au travers de l'ouverture 50.

Le moyen d'étanchéité 2 peut en outre comprendre un joint 27, notamment un joint rectiligne, s'étendant au niveau de l'ouverture 55 débouchant dans une chambre du bol 5 destinée au positionnement du support 7 à l'intérieur lorsque le couvercle est fermé. Le joint 27 rectiligne est destiné à être mis en appui contre le support 7 pivoté en l'état fermé de telle sorte que l'eau s'écoulement horizontalement le long de la pièce de carrosserie lorsque le véhicule est en mouvement, puisse être déviée de la prise 3 se trouvant derrière.

Le moyen d'étanchéité 2 peut en outre comprendre une double piste d'étanchéité formée par les joints 23, 24 qui est portée pour partie par le couvercle 6 et pour partie par le bol 5 afin de rendre étanche la trappe de chargement 4 lorsque le couvercle 6 est en position de fermeture. La piste d'étanchéité 23 peut notamment être disposée à la jonction du support 7 articulé et du panneau 61 fixé au support, le panneau 61 étant destiné à fermer l'ouverture de la pièce de carrosserie 10 en étant disposé à affleurement de cette dernière. Le joint 24 peut notamment être disposé à la jonction du bol 5 et de la pièce de carrosserie 10 de telle sorte qu'il vient en appui périphérique contre le bord extérieur du panneau 61.

La nervure principale 21 est disposée entre les joints d'étanchéité 22 et 24 du bol 5 de telle sorte qu'en position d'ouverture du couvercle 6, l'eau collectée par la nervure principale 21 peut être évacuée en suivant au moins l'un des cheneaux délimités verticalement par les deux joints.

La trappe de chargement 4 comportant le moyen d'étanchéité 2 améliore considérablement l'étanchéité à l'eau de l'agencement comportant la trappe de chargement 4 et la pièce de carrosserie 10, évitant de la sorte une corrosion augmentée du fait d'un écoulement d'eau vers une zone sèche de l'habitacle du véhicule.

La protection contre l'écoulement d'eau au niveau du module électronique 8 et du bol 5 sur lequel le module 8 est assemblé est améliorée par la présence des guides d'eau, de telle sorte qu'en position d'ouverture du couvercle 6, l'eau de ruissellement contourne les ouvertures de la trappe au travers desquelles le module 8 s'étend.

## Revendications

1. Trappe de chargement (4) comportant un bol (5) et un couvercle (6) articulé autour du bol, notamment à rotation d'axe sensiblement vertical, le bol (5) comprenant au moins une ouverture (50-55), **caractérisée en ce qu'**il comprend un moyen d'étanchéité (2), notamment à l'eau, disposé à proximité de l'au moins une ouverture ménagée sur la trappe.

2. Trappe (4) selon la revendication 1, **caractérisée en ce que** ledit moyen d'étanchéité comprend au moins une nervure (21a, 21b), notamment des nervures secondaires (21a, 21b) entourant en toute ou partie au moins une ouverture (51, 52, 53) afin de former une paroi saillante de guidage de l'eau hors de l'ouverture, l'ouverture (51, 52, 53) étant destinée à recevoir un module électronique (8) fixé contre une face intérieure du bol (5).

3. Trappe (4) selon la revendication précédente, **caractérisée en ce que** la nervure (21a), notamment la nervure secondaire, a un profil sensiblement en U inversé de telle sorte qu'elle entoure des bords supérieur et latéraux d'une large ouverture (51).

4. Trappe (4) selon la revendication 2 ou 3, **caractérisée en ce que** la nervure (21b), notamment la nervure secondaire, a un profil sensiblement en U inversé de telle sorte qu'elle entoure à la fois un bord supérieur et un bord latéral d'une première ouverture (52) et d'une seconde ouverture (53), les première et seconde ouvertures (52, 53) étant disposées l'une à côté de l'autre.

5. Trappe (4) selon la revendication précédente, **caractérisée en ce que** les première et seconde ouvertures (52, 53) sont chacune disposées au-dessous de la large ouverture (51).

6. Trappe selon la revendication 1 ou 2, **caractérisée en ce que** ledit moyen d'étanchéité comprend une nervure (21) s'étendant le long d'un bord périphérique du bol (5), notamment un bord périphérique supérieur, afin de former une paroi saillante de guidage de l'eau hors d'un fond de bol.

7. Trappe selon la revendication précédente, **caractérisée en ce que** l'au moins une nervure et le bol sont réalisés par moulage d'une matière plastique.

8. Trappe selon l'une quelconque des revendications précédentes, **caractérisée en ce que** ledit moyen d'étanchéité comprend au moins un joint d'étanchéité (25, 26, 27) s'étendant en toute ou partie le long d'un bord périphérique d'une ouverture (50, 54, 55), notamment d'une ouverture (50) de prise (3) et/ou d'une ouverture (54) d'un moyen de verrouillage (60) et/ou d'une ouverture (55) de support (7) du panneau (61) du couvercle (6).

9. Trappe selon l'une quelconque des revendications précédentes, **caractérisée en ce que** ledit moyen d'étanchéité comprend au moins un joint d'étanchéité (22, 23, 24) s'étendant en périphérique d'un bord de la trappe, notamment d'un joint intérieur (22) situé sur un bord intérieur périphérique du bol (5) et/ou un joint (23) situé sur un bord périphérique de support (7) et/ou un joint extérieur (24) situé sur un bord extérieur périphérique du bol (5).

10. Trappe selon la revendication 8 ou 9, **caractérisée en ce que** le joint d'étanchéité est réalisé par surmoulage d'une matière plastique déformable du bol (5) et/ou du support (7) de couvercle (6).

11. Agencement d'une pièce de carrosserie (10), notamment du type d'une aile ou d'une aile arrière, d'un véhicule, notamment de type EV ou PHEV, et d'une trappe de chargement (4) selon l'une quelconque des revendications précédentes, **caractérisé en ce que** le moyen d'étanchéité (2) est disposé en partie sommitale de la trappe (4) de telle sorte que l'écoulement de l'eau le long de la pièce de carrosserie (10), notamment le long d'un axe sensiblement vertical, contourne au moins une ouverture (50-55) de la trappe (4).

12. Agencement selon la revendication précédente, **caractérisé en ce que** la pièce de carrosserie (10) comprend une ouverture, la trappe (4) de chargement étant assemblée contre une face intérieure de la pièce de carrosserie de sorte que le moyen d'étanchéité (2) s'étende à la jonction de l'ouverture de la pièce de carrosserie (10) et de la trappe (4).

13. Agencement selon l'une des revendications 11 et 12, **caractérisé en ce qu'**il comprend un module électronique (8) assemblé de manière démontable à la trappe (4), notamment par clippage.

14. Véhicule de type EV ou PHEV, **caractérisé en ce qu'**il comprend une trappe (4) selon au moins l'une des revendications 1 à 10, ou un agencement selon l'une des revendications 11 à 13.
